# EUROPÄISCHE PATENTSCHRIFT

(11) **EP 3 475 937 B1**
(45) Veröffentlichungstag und Bekanntmachung des Hinweises auf die Patenterteilung: **26.05.2021**
(21) Anmeldenummer: 17801006.2
(22) Anmeldetag: 22.08.2017
(51) Int. Cl.: G09B 15/06, A63B 23/16, A63B 71/06

(54) **ÜBUNGSSCHEIBE ZUR KRÄFTIGUNG DER FINGER**
EXERCISE DISC FOR STRENGTHENING THE FINGERS
DISQUE D'ENTRAÎNEMENT UTILISÉ POUR FORTIFIER LES DOIGTS

(30) Priorität: 24.08.2016 DE 102016010511; 24.08.2016 DE 202016005316 U
(43) Veröffentlichungstag der Anmeldung: 01.05.2019
(73) Patentinhaber: Lin, Yiming, 10789 Berlin (DE)
(72) Erfinder: Lin, Yiming, 10789 Berlin (DE)
(74) Vertreter: Hoefer & Partner Patentanwälte mbB
(86) Internationale Anmeldenummer: PCT/DE2017/000271
(87) Internationale Veröffentlichungsnummer: WO 2018/036577

(56) Entgegenhaltungen:
- CN-U- 204 990 838
- US-A- 5 013 030
- US-A1- 2006 079 380
- US-B1- 7 081 032
- R. Wiltfong: "Wayback Machine", , 3. Mai 2016 (2016-05-03), Seiten 1-1, XP055436127, Gefunden im Internet: URL:https://web.archive.org/web/2016050302 2553/http://www.beatriceco.com/bti/porticu s/bell/images/removing_dial_wheel.gif [gefunden am 2017-12-18]
- Anonymous: "Die Wählscheibe für die Nummernwahl", , 12. April 2016 (2016-04-12), Seiten 1-2, XP055436008, Gefunden im Internet: URL:https://web.archive.org/web/2016041216 3856/http://bayern-online.com/v2261/artike l.cfm/203/die-waehlscheibe-fuer-die-nummer nwahl.html [gefunden am 2017-12-18]

## Beschreibung

Die Erfindung betrifft eine Übungsscheibe zur Kräftigung der Finger und zur Verbesserung der Fingerfertigkeiten in Bezug auf eine Bewegung in der Handebene und dient allgemeinen Gesundheitszwecken und insbesondere zum Fingertraining für Musiker.

Eine Fingerkraftübungsscheibe für Musiker ist aus der CN 204990838 U bekannt. Diese Kreisscheibe weist drei koaxial angeordnete Ringe auf, wobei in den Nuten zwischen den Ringen Fingerlöcher vorgesehen sind sowie zwei Ausnehmungen für den rechten und den linken Daumen.

US 5 013 030 A offenbart eine Scheibe mit einer Vielzahl von Öffnungen, die darin ausgebildet sind, um die kleinen, Ring-, Mittel- und Zeigefinger einer Hand aufzunehmen. Von der ersten Vielzahl von Öffnungen ist eine zweite Vielzahl von Öffnungen beabstandet, in denen der Daumen der Hand aufgenommen werden soll.

R. Wiltfong: "Wayback Machine", 3. Mai 2016 (20 16-05-03), Seiten 1-1, XP055436127 offenbart eine Wahlscheibe zum Telefonieren umfassend einen Scheibenkörper und eine Vielzahl von kreisförmigen Öffnungen.

Anonymous: "Die Wählscheibe für die Nummernwahl", 12. April 2016 (2016-04-12), Seiten 1-2, XP055436008 offenbart eine Wahlscheibe zum Telefonieren umfassend einen Scheibenkörper und eine Vielzahl von langförmigen Öffnungen mit halbkreisförmigen Enden.

CN 204 990 838U offenbart eine Übungsscheibe für die Fingerkraft eines Musikinstruments, einschließlich eines Körpers mit Elastizität. Die Oberfläche der Hauptkörperplatte ist mit einem ringförmigen ersten, zweiten und dritten Damm versehen, die in dieser Reihenfolge von innen nach außen angeordnet sind. Die Mittelachse des zweiten Dammes und die Mittelachse des dritten Dammes fallen mit der Mittelachse des ersten Dammes zusammen. Eine ringförmige mittlere Ringnut ist zwischen der Außenfläche des ersten Damms und der Innenfläche des zweiten Damms ausgebildet, und eine ringförmige Außenringnut ist zwischen der Außenfläche des zweiten Damms und der Innenfläche des dritten Damms ausgebildet. Die mittlere Ringnut und die äußere Ringnut sind jeweils mit mehreren Fingerlöchern versehen, die an den Finger einer Person angepasst sind.

US 2006/079380 A1 offenbart ein Übungswerkzeug für Kletterer, um die Muskeln im Unterarm zu trainieren, die beim Klettern verwendet werden. Eine kreisförmige Scheibe ist mit Rippen und Rillen auf ihrer Oberfläche konfiguriert, die Merkmale einer Felswand nachbilden. Die Scheibe kann über eine Schnur an einem Gewicht befestigt werden. Der Benutzer trainiert Muskeln, indem er die Scheibe mit den verschiedenen Funktionen greift und das Gerät und das Gewicht anhebt.

Auf einer mittigen Erhebung stützt sich das Handgelenk ab. Beim Training sind die Finger in den Fingerlöchern mit einem Teil der Fingerkuppe fixiert und durch die Nutwände gegen eine Vor- und Zurückbewegung gehindert, so dass sie nach links oder rechts unter Krafteinwirkung schwenken.

Aufgabe der Erfindung ist eine Kräftigung der Finger und eine Verbesserung der Fingerfertigkeiten in Bezug auf eine Bewegung in der Handebene zu erzielen.

Gelöst wird diese Aufgabe mit den Merkmalen des Anspruches 1. Vorteilhafte Ausgestaltungen sind Gegenstand der Unteransprüche.

Bei einer Übungsscheibe zur Kräftigung der Finger der Hand mit einem Scheibenkörper mit einer oberen Scheibenfläche zum Auflegen der Innenhandfläche mit den Fingern und einem Daumen, wobei in die obere Scheibenfläche Aufnahmen für einen Teil der Fingerkuppen und einen Teil der Daumenkuppe eingelassen sind, wird erfindungsgemäß vorgeschlagen, dass ein Scheibenkörper für die linke Hand und ein Scheibenkörper für die rechte Hand vorgesehen sind, für den jeweils einen Teil der Fingerkuppe und den einen Teil der Daumenkuppe jeweils zwei benachbart angeordnete Aufnahmen vorgesehen sind und
der Wechsel der jeweiligen Finger und des Daumens zwischen den beiden Aufnahmen durch Abduktion/Adduktion vornehmbar ist.

Die Scheibenkörper sind bevorzugt kreisförmig ausgeführt mit einer leicht konvexen oberen Scheibenfläche, so dass die Handinnenfläche mit Fingern und Daumen bequem auf der Scheibenfläche aufliegt.

Dabei können die Scheibenkörper handgrößenabhängig ausgestaltet sein und/oder die Aufnahmen weisen eine solche Länge auf, dass sie für unterschiedliche Fingerlängen geeignet sind. Deshalb finden Aufnahmen Verwendung, die die Form von Sacklanglöchern besitzen. Diese sind in der Länge und Breite so ausgelegt sind, dass sie mindestens das dritte Fingerglied des jeweiligen Fingers bzw. das zweite Daumenglied in der Länge und Breite aufnehmen können.

Die paarweise Anordnung der Sacklanglöcher für den jeweiligen Finger bzw. den Daumen erfolgt dabei so, dass die Mittellinien der Sacklanglöcher für jeweils einen Finger und die Mittellinien der Sacklanglöcher für den einen Daumen jeweils in einem spitzen Winkel (α) zueinander stehen. Der Kreuzungspunkt der Mittellinien der Sacklanglöcher für jeweils einen Finger und die Mittellinien der Sacklanglöcher für den einen Daumen kreuzen sich dabei im Bereich des jeweiligen Finger- bzw. Daumengrundgelenkes .Grundgelenk ist dabei das Gelenk zwischen den Mittelhandknochen und den Finger- bzw. Daumenknochen.

Eine weitere Ausgestaltung sieht vor, dass die einander zugewandten Außenkanten der beiden benachbarten Aufnahmen für jeweils einen Finger und den Daumen angefast oder gebrochen sind. Der Wechsel der jeweiligen Finger und des Daumens zwischen den beiden Aufnahmen durch Abduktion/Adduktion erfolgt so nicht über das Abgleiten über eine scharfe Kante.

Bevorzugt bestehen die Scheibenkörper aus einem elastischen Kunststoff, insbesondere Ethylenvinylacetat (EVA).

Um beim Wechsel der jeweiligen Finger und des Daumens zwischen den beiden Aufnahmen durch Abduktion/Adduktion nicht in eine falsche Aufnahme zu gelangen, sind auf der oberen Scheibenfläche Pfeile angegeben, die den Finger- bzw. Daumenwechsel zwischen den beiden richtigen Aufnahmen für den jeweiligen Finger bzw. Daumen markieren.

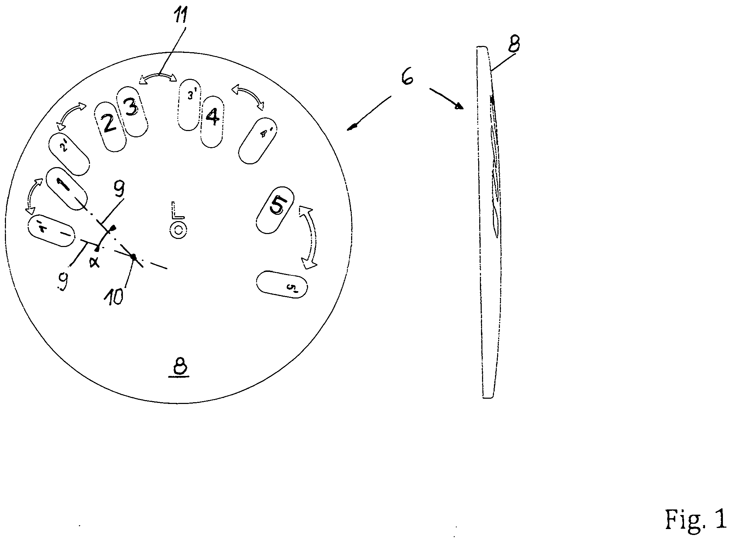

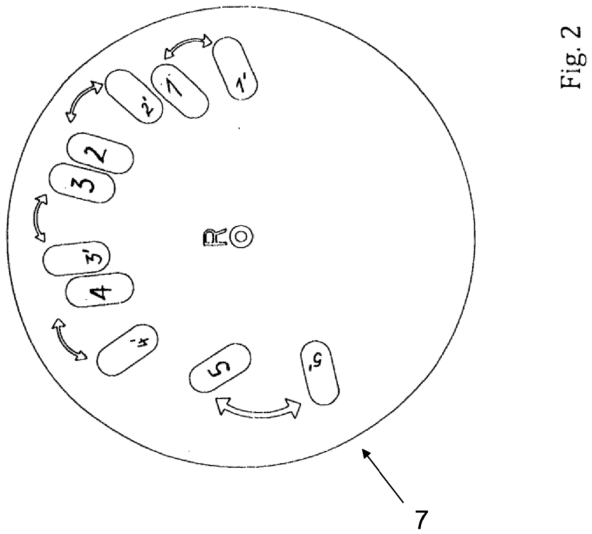

Die Erfindung soll anhand der Zeichnungen erläutert werden. Dabei zeigt die Fig. 1 einen Scheibenkörper 6 für die linke Hand und Fig. 2 den Scheibenkörper 7 für die rechte Hand. Der Aufbau ist spiegelbildlich, so dass nur der Aufbau für die linke Hand erläutert wird.

Die Übungsscheibe zur Kräftigung der Finger der linken Hand weist einen Scheibenkörper 6 mit einer leicht konvex gewölbten oberen Scheibenfläche 8 zum Auflegen der Innenhandfläche mit den Fingern und einem Daumen auf. Der Scheibendurchmesser liegt bevorzugt zwischen 24 - 26 cm.

In die obere Scheibenfläche 8 sind paarweise und benachbart Aufnahmen für die Finger und den Daumen angeordnet:
- 1, 1': Aufnahme für einen Teil der Fingerkuppe des kleinen Fingers,
- 2, 2': Aufnahme für einen Teil der Fingerkuppe des Ringfingers,
- 3, 3': Aufnahme für einen Teil der Fingerkuppe des Mittelfingers,
- 4, 4': Aufnahme für einen Teil der Fingerkuppe des Zeigefingers und
- 5, 5': Aufnahme für einen Teil der Daumenkuppe.

Die Aufnahmen 1-1` - 5-5' besitzen die Form von Sacklanglöchern und sind in der Länge und Breite so ausgelegt, dass mindestens das dritte Fingerglied des jeweiligen Fingers bzw. das zweite Daumenglied in der Länge und Breite aufnehmbar sind.

Die Anordnung der paarweisen Aufnahmen 1-1` - 5-5' erfolgt dabei so, dass die Mittellinien 9 der Sacklanglöcher für jeweils einen Finger und die Mittellinien 9 der Sacklanglöcher für den einen Daumen jeweils in einem spitzen Winkel (a) zueinander stehen, wobei der Kreuzungspunkt im Bereich 10 des jeweiligen Finger- bzw. Daumengrundgelenkes liegt. In der Fig. 1 ist dies am Beispiel der beiden Aufnahmen 1-1' für den kleinen Finger dargestellt.

Die Aufnahmen 1 - 5 folgen dabei der natürlichen Finger-und Daumenhaltung.

Die einander zugewandten Außenkanten der beiden benachbarten Aufnahmen 1-1' - 5-5' für jeweils einen Finger und den Daumen sind angefast oder gebrochen ausgeführt.

Die Wirkungsweise ist folgende: Die linke Hand wird auf die obere Scheibenfläche 8 aufgelegt, wobei das jeweils dritte Fingerglied und das zweite Daumenglied in die jeweilige Aufnahme 1 - 5 in natürlicher Weise eingreifen. Dann wird bevorzugt in zeitlicher Reihenfolge durch eigene seitliche Muskelkraft auf den Finger bzw. den Daumen dessen drittes Fingerglied bzw. das zweite Daumenglied über die jeweilige Außenkante der jeweiligen Aufnahme 1 - 5 gedrückt und gleitet auf der oberen Scheibenfläche 8 bis in die zugehörige zweite Aufnahme 1' - 5'. Danach erfolgt die Bewegung von den jeweiligen Aufnahmen 1' - 5' zurück in die Aufnahmen 1 - 5.

Dieser Wechsel trainiert die Finger und den Daumen in Bezug auf die Kräftigung und die Fingerfertigkeit. Die Pfeile 11 unterstützen den Trainierenden beim Finden der richtigen Richtung.

### Bezugszeichenliste

- 1,1': Aufnahme für einen Teil der Fingerkuppe des kleinen Fingers
- 2,2': Aufnahme für einen Teil der Fingerkuppe des Ringfingers
- 3,3': Aufnahme für einen Teil der Fingerkuppe des Mittelfingers
- 4,4': Aufnahme für einen Teil der Fingerkuppe des Zeigefingers
- 5,5': Aufnahme für einen Teil der Daumenkuppe
- 6: Scheibenkörper
- 7: Scheibenkörper
- 8: obere Scheibenfläche
- 9: Mittellinie der Sacklanglöcher
- 10: Bereich des Finger- bzw. Daumengrundgelenkes
- 11: Pfeile als Markierung

## Patentansprüche

1. Übungsscheibe zur Kräftigung der Finger der Hand mit einem Scheibenkörper (6, 7) mit einer oberen Scheibenflache (8) zum Auflegen der Innenhandfläche mit den Fingern und einem Daumen, wobei in die obere Scheibenfläche (8) Aufnahmen (1 - 5) für einen Teil der Fingerkuppen und einen Teil der Daumenkuppe eingelassen sind, **dadurch gekennzeichnet, dass**
ein Scheibenkörper (6) für die linke Hand und ein Scheibenkörper (7) für die rechte Hand vorgesehen sind,
für den jeweils einen Teil der Fingerkuppe und den einen Teil der Daumenkuppe jeweils zwei benachbart angeordnete Aufnahmen (1-1' - 5-5') vorgesehen sind und der Wechsel der jeweiligen Finger und des Daumens zwischen den beiden Aufnahmen durch Abduktion/Adduktion vornehmbar ist,
wobei die Aufnahmen (1-1' - 5-5') die Form von Sacklanglöchern besitzen,
wobei die Mittellinien (9) der Sacklanglöcher für jeweils einen Finger und die Mittellinien (9) der Sacklanglöcher für den einen Daumen jeweils in einem spitzen Winkel (α) zueinander stehen,
wobei die Mittellinien (9) der Sacklanglöcher für jeweils einen Finger und die Mittellinien (9) der Sacklanglöcher für den einen Daumen sich im Bereich (10) des jeweiligen Finger- bzw. Daumengrundgelenkes kreuzen,
und wobei die Aufnahmen (1-1' - 5-5') in der Länge und Breite so ausgelegt sind, dass mindestens das dritte Fingerglied des jeweiligen Fingers bzw. das zweite Daumenglied in der Länge und Breite aufnehmbar sind.

2. Übungsscheibe nach Anspruch 1, **dadurch gekennzeichnet, dass**
die einander zugewandten Außenkanten der beiden benachbarten Aufnahmen (1-1' - 5-5') für jeweils einen Finger und den Daumen angefast oder gebrochen sind.

3. Übungsscheibe nach einem der Ansprüche 1 bis 2, **dadurch gekennzeichnet, dass**
die Scheibenkörper (6, 7) aus einem elastischen Kunststoff bestehen.

4. Übungsscheibe nach Anspruch 3, **dadurch gekennzeichnet, dass**
das Scheibenmaterial EVA ist.

5. Übungsscheibe nach einem der Ansprüche 1 bis 4, **dadurch gekennzeichnet, dass**
die Scheibenkörper (6, 7) kreisförmig ausgebildet sind.

6. Übungsscheibe nach einem der Ansprüche 1 bis 5, **dadurch gekennzeichnet, dass**
die obere Scheibenfläche (8) flach konvex gewölbt ist.

7. Übungsscheibe nach einem der Ansprüche 1 bis 6, **dadurch gekennzeichnet, dass**
auf der oberen Scheibenfläche (8) Pfeile (11) angegeben sind, die den Finger- bzw. Daumenwechsel zwischen den beiden Aufnahmen (1-1' - 5-5') für den jeweiligen Finger bzw. Daumen markieren.

## Claims

1. An exercise disc for strengthening the fingers of a hand, having a disc body (6, 7) with an upper disc surface (8) for placing an inner hand surface with the fingers and a thumb, wherein receiving elements (1 - 5) for a part of the fingertips and a part of the thumb tip are embedded into the upper disc surface (8), and the exercise disc is **characterized in that**:
a disc body (6) for a left hand and a disc body (7) for a right hand are provided,
two adjacent receiving elements (1-1'- 5-5") are provided respectively for the part of the fingertip and the part of the thumb tip in each case,
the change of the respective fingers and of the thumb between the two receiving elements can be carried out by means of abduction/adduction,
the receiving elements (1-1'- 5-5") have the shape of blind elongated holes,
the center lines (9) of the blind elongated holes for a finger in each case and the center lines (9) of the blind elongated holes for the thumb are each at an acute angle (a) with respect to one another,
the center lines (9) of the blind elongated holes for a finger in each case and the center lines (9) of the blind elongated holes for the thumb intersect in the region (10) of the respective finger or thumb base joint, and
the length and width of the receiving elements (1-1'- 5-5') are designed such that at least a third finger phalanx of the respective finger or a second thumb phalanx can be received in the length and width.

2. The exercise disc according to claim 1, **characterized in that**:
outer edges facing each other of the two adjacent receiving elements (1-1'- 5-5') for a finger in each case and the thumb are chamfered or broken.

3. The exercise disc according to claim 1 or 2, **characterized in that**:
the disc bodies (6, 7) each consist of an elastic plastic member.

4. The exercise disc according to claim 3, **characterized in that**:
the disc material is EVA.

5. The exercise disc according to any of claims 1 to 4, **characterized in that**:
the disc bodies (6, 7) each have a circular shape.

6. The exercise disc according to any of claims 1 to 5, **characterized in that**:
the upper disc surface (8) is flat or convexly curved.

7. The exercise disc according to any of claims 1 to 6, **characterized in that**:
arrows (11) are indicated on the upper disc surface (8), said arrows marking the change of the fingers or the thumb between the two receiving elements (1-1'- 5-5') for the respective finger or thumb.

## Revendications

1. Disque d'exercice pour renforcer les doigts de la main, ayant un corps de disque (6, 7) avec une surface supérieure du disque (8) pour placer la surface intérieure de la main avec les doigts et le pouce, dans lequel les éléments de réception (1-5) pour une partie des bouts des doigts et une partie du bout du pouce sont inserrée dans la surface supérieure du disque (8), et le disque d'exercice est **caractérisé en ce que**:
un corps de disque (6) pour la main gauche et un corps de disque (7) pour la main droite sont prévus,
deux éléments de réception adjacents (1-1'- 5-5') sont prévus respectivement pour la partie du bout du doigt et la partie du bout du pouce dans chaque cas,
le changement des doigts respectifs et du pouce entre les deux éléments de réception peut être réalisé par abduction/adduction,
les éléments de réception (1-1'- 5-5') ont la forme de trous borgnes allongés,
les lignes médianes (9) des trous borgnes allongés pour un doigt dans chaque cas et les lignes médianes (9) des trous borgnes allongés pour le pouce sont chacune à un angle aigu (α) l'une par rapport à l'autre,
les lignes médianes (9) des trous allongés borgnes pour un doigt dans chaque cas et les lignes médianes (9) des trous allongés borgnes pour le pouce se coupent dans la région (10) de l'articulation de base respective du doigt ou du pouce, et
la longueur et la largeur des éléments de réception (1-1'-5-5') sont conçues de telle sorte qu'au moins une phalange du troisième doigt du doigt respectif ou une deuxième phalange du pouce puisse être reçue dans la longueur et la largeur.

2. Disque d'exercice selon la revendication 1, **caractérisé en ce que**:
les bords extérieurs se faisant face des deux éléments de réception adjacents (1-1'-5-5') pour un doigt dans chaque cas et le pouce sont chanfreinés ou cassés.

3. Disque d'exercice selon la revendication 1 ou 2, **caractérisé en ce que**:
les corps de disque (6, 7) sont chacun constitués d'un élément plastique élastique.

4. Disque d'exercice selon la revendication 3, **caractérisé en ce que**:
le matériel de disque est EVA.

5. Disque d'exercice selon l'une quelconque des revendications 1 à 4, **caractérisé en ce que**:
les corps de disque (6, 7) ont chacun une forme circulaire.

6. Disque d'exercice selon l'une quelconque des revendications 1 à 5, **caractérisé en ce que**:
la surface supérieure du disque (8) est plate ou incurvée de manière convexe.

7. Disque d'exercice selon l'une quelconque des revendications 1 à 6, **caractérisé en ce que**:
des flèches (11) sont indiquées sur la surface supérieure du disque (8), lesdites flèches marquant le changement des doigts ou du pouce entre les deux éléments de réception (1-1'-5-5') pour le doigt ou le pouce respectif.
